# EUROPÄISCHE PATENTSCHRIFT

(11) **EP 0 719 956 B1**
(45) Veröffentlichungstag und Bekanntmachung des Hinweises auf die Patenterteilung: **06.05.1998**
(21) Anmeldenummer: 95117466.3
(22) Anmeldetag: 07.11.1995
(51) Int. Cl.: F16D 65/02, F16D 69/02

(54) **Verfahren zur Herstellung von Verbundwerkstoffen sowie verfahrensgemässer Verbundwerkstoff**
Method for the production of layered materials and materials thus obtained
Procédé pour la fabrication de matériaux stratifiés et matériaux ainsi obtenus

(30) Priorität: 31.12.1994 DE 4447338
(43) Veröffentlichungstag der Anmeldung: 03.07.1996
(73) Patentinhaber: AlliedSignal Bremsbelag GmbH, 21509 Glinde (DE)
(72) Erfinder: Valentin, Wolfgang, Dipl.-Ing., D-21509 Glinde (DE)
(74) Vertreter: Richter, Werdermann & Gerbaulet

(56) Entgegenhaltungen:
- EP-A- 0 344 778
- DE-A- 2 808 174
- DE-A- 2 928 572
- DE-A- 4 223 417
- GB-A- 2 003 088
- US-A- 3 891 398
- PATENT ABSTRACTS OF JAPAN vol. 005, no. 152 (C-073), 25.September 1981 & JP-A-56 084431 (INOUE JAPAX RES INC), 9.Juli 1981,

## Beschreibung

Die Erfindung betrifft ein Verfahren zur Herstellung von Verbundwerkstoffen für Bremsbeläge sowie den verfahrensgemäßen Verbundwerkstoff aus zwei Schichten für Bremsbeläge.

Reib- bzw. Bremsbeläge für Bremsen, insbesondere für Scheibenbremsen sowie Verfahren zu deren Herstellung sind aus dem Stand der Technik bekannt.

Durch die DE-A- 42 23 417 ist ein Bremsklotz für Scheibenbremsen aus gesinterten Materialien auf pulvermetallurgischer Basis, mit einem Reibbereich und einem mechanisch beanspruchten Rückenbereich als Befestigungsmittel bekannt, der aus gesintertem Material auf pulvermetallurgischer Basis gebildet wird, das eine höhere Dichte, insbesondere einen höheren Metallanteil als das Material des Reibbereiches aufweist. Durch den hohen Metallanteil stellt der Rückenbereich praktisch eine Metallplatte dar. Danach besteht der Bremsklotz aus einem Verbundwerkstoff, hergestellt aus zwei Komponenten auf pulvermetallurgischer Basis unter Ausbildung von zwei Schichten, die miteinander in Kontakt gebracht und gesintert, d.h. unter Druck verpreßt und einer Temperaturbehandlung bei einer Temperatur von 800° bis 1000° C unterzogen werden. Danach soll ein Reibklotz erhalten werden, der im mechanisch beanspruchten Rückenbereich eine höhere Festigkeit gegenüber Reibklötzen aus einschichtig gesinterten Materialien auf pulvermetallurgischer Basis aufweisen soll.

So sind ferner in der DE-GM 82 01 404 und der DE 41 38 933 Al Reibbeläge offenbart, die ein- oder mehrteilig ausgebildet sind, wobei ein Reibwerkstoffblock auf einer Trägerplatte bzw. einem Trägerblech befestigt ist. Zur Befestigung weist die Trägerplatte ein aufgesintertes Halterungsbett aus einzelnen, mit dem Reibwerkstoffblock kraft- und formschlußbildenden Formkörpern mit Hinterschneidungen, Einziehungen od.dgl. auf. Auf dieses Halterungsbett ist der Reibwerkstoffblock aufgepreßt unter Ausfüllung der Hinterschneidungen, Einziehungen od.dgl. der einzelnen Formkörper befestigt.

Mitunter werden auch Zwischenschichten zwischen Reibwerkstoffblock und Trägerplatte verwendet, die als Binderfolie oder als Kleber ausgebildet sind.

Es hat sich jedoch gezeigt, daß zwischen dem Halterungsbett und dem Reibwerkstoffblock Rißbildungen und/oder Korrosion auftreten kann, so daß eine Unterrostung des Reibwerkstoffblockes kriechend von der Seite erfolgen kann, was die Bremswirkung nachteilig beeinflussen kann, bis hin zum Totalausfall einer Bremse. Zudem ist das Fertigungsverfahren relativ aufwendig und teuer, insbesondere die Befestigung des Reibwerkstoffblockes auf der Trägerplatte mittels eines aufgesinterten Halterungsbettes.

Es ist daher Aufgabe der Erfindung, ein Verfahren zur Herstellung eines Verbundwerkstoffes aus zwei Komponenten mit einem hochfesten Verbund der beiden Komponenten als Bremsbelag und damit einen Verbundwerkstoff als Bremsbelag zu schaffen, der es ermöglicht, in einfachster Weise den Bremsbelag auf der notwendigen Trägerplatte kraft- und formschlüssig zu befestigen.

Diese Aufgabe wird durch die Merkmale der Ansprüche 1 und 7 gelöst.

Dazu ist erfindungsgemäß vorgesehen, einen Verbundwerkstoff zu schaffen, der einerseits aus Aluminium und andererseits aus einem organischen Material besteht. Beide Materialien werden pulverisiert eingesetzt und mittels eines pulvermetallurgischen Verfahrens miteinander verbunden.

Beide Komponenten werden unter Ausbildung von zwei Schichten miteinander in Kontakt gebracht und mit einem Druck von 200-400 MPa, vorzugsweise 250-350 MPa, verpreßt.

Anschließend wird der Formkörper temperaturbehandelt bei einer Temperatur von 550° bis 650°C, vorzugsweise bei 580°C. Die Temperaturbehandlung erfolgt erfindungsgemäß unter Schutzgasatmosphäre, wobei Wasserstoff, Stickstoff, Argon od.dgl. Verwendung finden. Die Verwendung eines Gemisches aus Wasserstoff und Stickstoff hat sich als am vorteilhaftesten herausgestellt, wobei 95% Wasserstoff und 5% Stickstoff eingesetzt werden.

Das Aluminiumpulver kann zur Variation der Eigenschaften mit Kupferpulver und/oder auch anderen Zusätzen versetzt werden, weil sich 3% Kupferpulver bewährt haben.

Als andere Zusätze können Silicium, Mineralfasern oder organische Zusätze bzw. Fasern eingesetzt werden.

Sinterreibwerkstoffe bestehen aus Metallpulver, Mineralien und/oder organischen Stoffen, wobei bei der Herstellung dieser Sinterreibwerkstoffe die Sintertemperaturen so eingestellt sein müssen, daß der Sinterreibwerkstoff in seinen Eigenschaften nicht beeinträchtigt wird, d.h. Sinterreibwerkstoffe auf der Basis von organischen Stoffen können nicht bei hohen Temperaturen gesintert werden. Metallpulver werden bei Temperaturen von 800°C bis 900°C und Mineralien bei Temperaturen um 1200°C gesintert. Durch das erfindungsgemäße Verfahren können hingegen Verbundwerkstoffe bzw. Reibwerkstoffe erhalten werden, die metallische, mineralische sowie organische Stoffe enthalten, ohne daß die organische Komponente durch zu hohe Temperaturen in ihren Eigenschaften beeinträchtigt wird, aber gleichzeitig ein hochfester Verband der Komponenten erzielt wird.

Durch die erfindungsgemäße Verwendung von Aluminium mit der organischen Komponente werden dessen Eigenschaften, wie Wärmeableitung, besser ausgenutzt.

Besonders vorteilhaft ist, daß ein erfindungsgemäßer Verbundwerkstoff auf Trägerplatten für Reibbeläge bzw. Bremsbeläge genietet werden kann. Dabei wird ein form- und kraftschlüssiger Verbund erhalten, der extrem kostengünstig herzustellen ist und gegen Korrosionserscheinungen weitgehend beständig ist. Herkömmliche Reibwerkstoffe ließen sich bisher nicht nieten, da es zu Ausbrüchen gekommen ist, was die Funktionssicherheit beeinträchtigte.

Weitere vorteilhafte Ausgestaltungen sind in den Unteransprüchen gekennzeichnet.

Nachstehend wird der Aufbau eines erfindungsgemäßen Verbundwerkstoffes in einer Zeichnung, die den Verbundwerkstoff in einer teilweise geschnittenen Seitenansicht zeigt, erläutert.

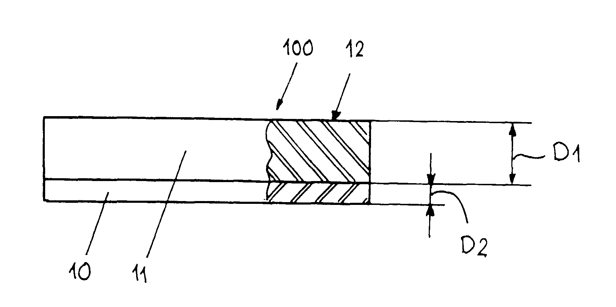

Die Zeichnung zeigt einen Verbundwerkstoffblock 100, der zwei unterschiedliche Schichten 10 und 11 aufweist. Die Schicht 10 besteht im wesentlichen aus der Aluminiumkomponente, gegebenenfalls mit erfindungsgemäßen Zusätzen, wie 3% Kupfer. Die Schicht 11 wird durch einen organischen Reibbelag gebildet.

Die Schichtdicken D1 und D2 der Schichten 10 und 11 sind derart gewählt, daß D1 größer D2 ist.

Senkrecht zur Oberfläche 12 des Verbundwerkstoffblocks 100 werden Durchgangsbohrungen eingebracht, die hier nicht dargestellt sind, durch die ebenfalls nicht dargestellte Nieten zur Befestigung mit einem Trägerblech geführt werden. Die Schicht 10 mit der metallischen Komponente weist dabei zur Trägerplatte.

Das erfindungsgemäße pulvermetallurgische Verfahren wird bevorzugterweise wie folgt durchgeführt:
- Kontaktierung der beiden pulverförmigen Komponenten, einerseits Aluminiumpulver mit 3% Kupferpulveranteil und andererseits der organischen Komponente unter Ausbildung von zwei Schichten,
- Verpressung der beiden Komponenten bei einem Druck von 250-350 MPa, und
- Temperaturbehandlung des erhaltenen Formkörpers des zweiten Verfahrenschrittes bei einer Temperatur von ca. 580°C in einem Durchlaufofen, wobei diese Temperaturbehandlung in einer Schutzgasatmosphäre durchgeführt wird. Das Schutzgas ist aus 95% Wasserstoff und 5% Stickstoff zusammengesetzt.

## Patentansprüche

1. Verfahren zur Herstellung von Verbundwerkstoffen für Bremsbeläge, bei dem zwei pulverförmige Komponenten, einerseits Metallpulver, andererseits organische Stoffe, unter Ausbildung von zwei Schichten miteinander in Kontakt gebracht, anschliessend unter Druck verpreßt werden und unter Schutzgasatmosphäre einer Temperaturbehandlung bei einer Temperatur von 550° bis 650° C, vorzugsweise 580° C unterzogen werden.

2. Verfahren nach Anspruch 1, dadurch gekennzeichnet, daß der Druck zur Verpressung beider Komponenten im Bereich von 200 bis 400 MPa, vorzugsweise im Bereich von 250 bis 350 MPa liegt.

3. Verfahren nach einem der Ansprüche 1 oder 2, dadurch gekennzeichnet, daß das Schutzgas eine Mischung aus Wasserstoff und Stickstoff ist.

4. Verfahren nach Anspruch 3, dadurch gekennzeichnet, daß sich das Schutzgas aus einer Mischung von 95% Wasserstoff und 5% Stickstoff zusammensetzt.

5. Verfahren nach einem der Ansprüche 1 bis 4, dadurch gekennzeichnet, daß das Schutzgas Stickstoff, Argon od.dgl. ist.

6. Verfahren nach einem der Ansprüche 1 bis 5, dadurch gekennzeichnet, daß die metallische Komponente als Hauptbestandteil Aluminiumpulver aufweist.

7. Verbundwerkstoff, hergestellt nach einem der Ansprüche 1 bis 6, dadurch gekennzeichnet, daß er aus zwei Schichten (10 und 11) besteht, daß die eine Schicht (10) des Verbundwerkstoffes aus pulvermetallurgisch behandeltem Aluminiumpulver und die andere Schicht (11) aus ebenfalls pulvermetallurgisch behandeltem, organischem pulverförmigen Material besteht.

8. Verbundwerkstoff nach Anspruch 7, dadurch gekennzeichnet, daß das pulvermetallurgisch behandelte Aluminumpulver Kupferpulver enthält.

9. Verbundwerkstoff nach Anspruch 8, dadurch gekennzeichnet, daß der Kupferpulveranteil 3% beträgt.

10. Verbundwerkstoff nach einem der Ansprüche 7 bis 9, dadurch gekennzeichnet, daß das pulvermetallurgisch behandelte Aluminumpulver Zusätze, wie Metallpulver, Mineralien oder organische Stoffe, enthält.

11. Verbundwerkstoff nach einem der Ansprüche 7 bis 10, dadurch gekennzeichnet, daß die Dicke (D1, D2) der Schichten (10) und (11) identisch ist.

12. Verbundwerkstoff nach einem der Ansprüche 7 bis 10, dadurch gekennzeichnet, daß die Dicke (D1) der Schicht (11) größer ist als die Dicke (D2) der Schicht (10).

## Claims

1. Method for the production of layered material for brake linings, in which two pulverulent components, one of them'metal powder, the other organic substances, are brought in contact with each other while forming two layers, are subsequently pressed while subject to pressure and, in an inert gas atmosphere, are subjected to a thermal treatment at a temperature ranging between 550° to 650°C, preferably 580°C.

2. Method according to Claim 1,
characterized in that
the pressure for pressing the two components is within the range of 200 to 400 MPa, preferably within the range of 250 to 350 MPa.

3. Method according to either Claim 1 or 2,
characterized in that
the inert gas is a mixture of hydrogen and nitrogen.

4. Method according to Claim 3,
characterized in that
the inert gas is composed of a mixture of 95% hydrogen and 5% nitrogen.

5. Method according to any of Claims 1 to 4,
characterized in that
the inert gas is nitrogen, argon or suchlike.

6. Method according to any of Claims 1 to 5,
characterized in that
the metallic component possesses aluminium powder as main component.

7. Layered material comprised of two layers (10 and 11) and produced according to any of Claims 1 to 6,
characterized in that
the one layer (10) of the layered material is comprised of powder-metallurgically treated aluminium powder and the other layer (11) of likewise metallurgically treated, organic pulverulent material.

8. Layered material according to Claim 7,
characterized in that
the powder-metallurgically treated aluminium powder contains copper powder.

9. Layered material according to Claim 8,
characterized in that
the proportion of copper powder is 3%.

10. Layered material according to any of Claims 7 to 9,
characterized in that
the powder-metallurgically treated aluminium powder contains additions, such as metal powder, minerals or organic substances.

11. Layered material according to any of Claims 7 to 10,
characterized in that
the thickness (D1,D2) of the Layers (10) and (11) is identical.

12. Layered material according to any of Claims 7 to 10,
characterized in that
the thickness (D1) of the layer (11) is greater than the thickness (D2) of the layer (10).

## Revendications

1. Procédé pour la fabrication de matériaux composites pour garnitures de frein, pour lequel deux composants en forme de poudre, d'une part de la poudre de métal, d'autre part des matières organiques, sont mis en contact l'un avec l'autre en formant deux couches, sont ensuite compactés sous pression et sont soumis dans une atmosphère de gaz protecteur à un traitement thermique à une température de 550° à 650°, de préférence à 580° C.

2. Procédé selon la revendication 1, caractérisé en ce que la pression pour le compactage des deux composants est de l'ordre de 200 à 400 MPa, de préférence de l'ordre de 250 à 350 MPa.

3. Procédé selon l'une des revendications 1 ou 2, caractérisé en ce que le gaz protecteur est un mélange d'hydrogène et d'azote.

4. Procédé selon la revendication 3, caractérisé en ce que le gaz protecteur se compose d'un mélange de 95% d'hydrogène et de 5% d'azote.

5. Procédé selon l'une des revendications 1 à 4, caractérisé en ce que le gaz protecteur est de l'azote, de l'argon ou équivalent.

6. Procédé selon l'une des revendications 1 à 5, caractérisé en ce que le composant métallique présente de la poudre d'aluminium comme constituant principal.

7. Matériau composite fabriqué selon l'une des revendications 1 à 6, caractérisé en ce qu'il est constitué par deux couches (10 et 11), que l'une des couches (10) du matériau composite est constituée par de la poudre d'aluminium traitée en métallurgie des poudres et que l'autre couche (11) est constituée par de la matière en forme de poudre organique, également traitée en métallurgie des poudres.

8. Matériau composite selon la revendication 7, caractérisé en ce que la poudre d'aluminium traitée en métallurgie des poudres contient de la poudre de cuivre.

9. Matériau composite selon la revendication 8, caractérisée en ce que le taux de poudre de cuivre est de 3%.

10. Matériau composite selon l'une des revendications 7 à 9, caractérisé en ce que la poudre d'aluminium traitée en métallurgie des poudres contient des additifs, comme de la poudre de métal, des minéraux ou des matières organiques.

11. Matériau composite selon l'une des revendications 7 à 10, caractérisé en ce que l'épaisseur (D1, D2) des couches (10) et (11) est identique.

12. Matériau composite selon l'une des revendications 7 à 10, caractérisé en ce que l'épaisseur (D1) de la couche (11) est plus grande que l'épaisseur (D2) de la couche (10).
